# NEUE EUROPÄISCHE PATENTSCHRIFT

(11) **EP 1 880 829 B2**
(45) Veröffentlichungstag und Bekanntmachung des Hinweises auf die Entscheidung über den Einspruch: **04.07.2018**
(45) Hinweis auf die Patenterteilung: 08.07.2009
(21) Anmeldenummer: 06014994.5
(22) Anmeldetag: 19.07.2006
(51) Int. Cl.: B29C 65/02, E03F 5/02

(54) **Vollflächig auf thermoplastische Kunststoff-Schachtböden aufgeschweißte Haftbrücken (Kunststoffprofilleisten und Kunststoffgranulat)**
Whole surface welded anti-slip coatings on plastic man holes (profiled strips and plastic granulates)
Revêtement de surface antidérapant soudé sur des trous d'hommes (profilés et granulés en plastique)

(43) Veröffentlichungstag der Anmeldung: 23.01.2008
(73) Patentinhaber: Predl, Manfred, 04924 Bönitz (DE)
(72) Erfinder: Predl, Manfred, 04924 Bönitz (DE)
(74) Vertreter: Beer & Partner Patentanwälte KG

(56) Entgegenhaltungen:
- PREDL GMBH: "PREDL -Polypropylen-Schachtboden" INTERNET ARTICLE, [Online] April 2002 (2002-04), XP002414059 Gefunden im Internet: URL:http://www.predl-gmbh.de/inhalte/produ kte/schachtboden/prospekt/prospekt.pdf> [gefunden am 2007-01-11]

## Beschreibung

Die Erfindung betrifft Haftbrücken auf Schachtböden aus thermoplastischem Kunststoff - nämlich Kunststoffprofilleisten (2) und/ oder Kunststoffgranulat (3) - welche auf der dem Beton zugewandten Seite des Schachtbodenhalbteils (1) im Verlauf des Herstellungsprozesses (vorzugsweise Vakuum-Tiefziehverfahren) vollflächig aufgeschweißt werden.

Kunststoff-Schachtböden sind Formteile, welche den Gerinneverlauf sowie die Bermenflächen von Beton-Kanalschächten aus abwasserbestandigem Kunststoff nachbilden. Es handelt sich dabei um eigenständige Baukörper, die aus duroplastischen (z. B. glasfaserverstärktes Polyesterharz) oder thermoplastischen Werkstoffen (z. B. Polypropylen, Polyethylen, Polystyrol, PVC) hergestellt werden können. Die Erfindung findet ausschließlich bei Schachtböden aus thermoplastischen Kunststoffen Anwendung. Diese werden vorzugsweise im Vakuum-Tiefziehverfahren derart hergestellt, dass in einer Vakuum-Tiefziehmaschine vorgefertigte Platten aus thermoplastischem Material erwärmt, mit Druckluft vorgestreckt und dann über einer Negativform verformt werden, wobei die zum Vorstrecken eingeblasene Stützluft durch eine Vakuumpumpe wieder abgesaugt wird. Die so hergestellten Kunststoff-Schachtböden werden, nachdem sie mit den entsprechenden Rohranschlussmuffen komplettiert wurden, in speziellen Gießformen oder maschinellen Schachtfertigem in verkehrter Lage (kopfüber) auf geeignete Stützformen aufgesetzt und danach in Beton eingegossen. Die fertigen Schachtunterteile werden nach dem Gießvorgang ausgeschalt - entweder als Frischentformung oder nach völliger Erhärtung als Festentschalung - und bilden nach einer definierten Härtungsphase den untersten Abschluss unterirdischer Schachtbauwerke. Schachtunterteile, welche mit einem Kunststoff-Schachtboden ausgekleidet sind, weisen bereits durch das Herstellungsverfahren eine hochwertige Betonqualität auf. Die Kunststoffauskleidung schützt den Beton darüber hinaus dauerhaft vor den Einwirkungen des Abwassers.

Zur wirksamen Verankerung des Kunststoff-Schachtbodens im Beton verfügen diese an den dem Beton zugewandten Seiten über geeignete Haftbrücken. Bei thermoplastischen Schachtböden wird dies bisher über Kunststoff-Profilleisten und/ oder über nachträglich aufgebrachte Harz-Kies-Gemische (Besandung) realisiert. Folgende Varianten gehören dabei zum Stand der Technik:
a) Verankerungs-Profilleisten aus dem gleichen Material wie der Schachtboden bestehend, welche mittels Heißkleber aufgeklebt oder mittels Ultraschallpunktschweißung aufgeschweißt werden. Zusätzlich wird auf der dem Beton zugewandten Seite des zuvor mechanisch aufgerauten Schachtbodens eine Harzbeschichtung aufgebracht und mit grobkörnigem Kies besandet (PREDL Kanalbauelemente GmbH D-04924 Bönitz, Allgemeine bautechnische Zulassung Z-42.2-294, Deutsches Institut für Bautechnik Berlin). Die Nachteile dieser Ausführung liegen vorrangig darin, dass die Harzbeschichtung nur als Film mechanisch an der Oberfläche des thermoplastischen Materials haftet und keine chemische Bindung mit dem Thermoplast eingeht. Gleiches gilt für den Heißkleber, mit welchem die Profilleisten aufgeklebt werden; durch die fehlende chemische Verbindung wird hierbei keine dauerhaft haltbare Verbindung erzielt Das Aufschweißen der Profilleisten im Uitraschaitpunktschweißverfahren führt zwar zu dauerhaften Verbindungen, ist jedoch mit hohem personellen (manuell per Handschweißpistole) oder maschinellen (automatisiert über Schweißroboter) Aufwand verbunden.
b) Profilleisten aus dem gleichen Material wie der Schachtboden bestehend, welche in der Negativform der Vakuumtiefziehmaschine fixiert und wahrend des Tiefziehprozesses auf der Seite des Schachtbodens, welche dem Abwasser zugewandt ist, von dem Schachtbodenmaterial formschlüssig umschlossen werden (FASZL Kunststoffindustrie Ges. mbH A-8072 Femitz, Allgemeine bautechnische Zulassung Z-42.2-359, Deutsches Institut für Bautechnik Berlin). Da sich das Schachtbodenmaterial bei dieser Ausführung um die darunter liegenden Profilleisten verteilen muss, besteht dabei die Gefahr, dass das thermoplastische Material dabei überstreckt wird und später zu Spannungsrissbildung neigt. Weiterhin ist es in dieser Ausführung nicht möglich, Haftbrücken im Bereich der Gerinne aufzubringen, diese müssen nachträglich manuell aufgebracht werden.

Die Erfindung verfolgt das Ziel, die Haftbrücken bereits während des Herstellungsprozesses der Schachtböden (Vakuum-Tiefziehverfahren) vollflächig mit dem Korpus des Schachtbodenhalbteils (1) zu verschweißen. Erfindungsgemäß wird diese Zielstellung wie folgt umgesetzt:

Nachdem vorgefertigte Platten aus thermoplastischem Material in die Heizzone der Tiefziehmaschine (manuell oder automatisch) eingelegt wurden, wird manuell oder mit einer entsprechenden Vorrichtung ein Kunststoffgranulat (3) (vorzugsweise Mahlgut aus dem gleichen thermoplastischen Material wie das Platten material) auf die Oberfläche der Kunststoffplatte, welche später die dem Beton zugewandte Seite bildet, aufgebracht Während des anschließenden Heizprozesses wird das Granulat unter Nutzung der im Tiefziehprozess anfallenden Prozesswärme unlösbar mit der Oberfläche der Kunststoffplatte verschweißt Zum gleichen Zeitpunkt werden Kunststoff-Profile (2) (gleicher Thermoplast wie das Plattenmaterial) auf der Seite, welche später mit dem Schachtboden verbunden werden soll, erwärmt Die Erwärmung kann entweder manuell (z. B. auf Heizplatten) oder automatisch (z. B. Erfassung und Positionierung elektronisch gesteuert mittels entsprechender Handlingsysteme, Erwärmung durch Heizstrahler) realisiert werden.

Nach Ablauf einer definierten Heizzeit wird die Platte, auf welcher das Kunststoffgranulat (3) durch die Strahlungswärme nun bereits aufgeschweißt wurde, wie unter [0002] beschrieben vorgestreckt und verformt. Nachdem die Stützluft abgesaugt wurde, werden die vorgewärmten Profilleisten (2) auf die Oberfläche der verformten Platte, welche nun bereits die dem Beton zugewandte Seite des Schachtbodenhalbteils (1)s bildet, manuell oder maschinell (Handling) mit einem definierten Druck aufgesetzt und verschweißen sich dabei vollflächig mit der Oberfläche des Schachtbodenhalbteils (1).

Das Aufsetzen der Profilleisten (2) muss abgeschlossen sein, bevor die Kühlung des Schachtbodenhalbteils (1) beginnt.

Die Erfindung weist gegenüber dem bisherigen Stand der Technik folgende Vorteile auf: Die vollflächige Verschweißung der Profilleisten (2) mit der rückseitigen Oberfläche des Schachtbodenhalbteils (1) erhöht die Haftzugfestigkeit gegenüber aufgeklebten oder punktgeschweißten Profilleisten - wie unter [0003] a) beschrieben - wesentlich. Durch die Verschweißung des Kunststoffgranulates (3) mit der rückseitigen Oberfläche des Schachtbodenhalbteils (1) wird ein dauerhaft stoffschlüssiger Materialverbund geschaffen, welcher die Wirksamkeit der Haftbrücken gegenüber der Beschichtung mit einem Harz-Kies-Gemisch wesentlich erhöht Da das Aufbringen der Haftbrücken erfindungsgemäß in den Prozess des Tiefziehens integriert wird, entfallen das nachträgliche Aufkleben/ Aufschweißen der Profilleisten (2) sowie die nachträgliche Beschichtung mit dem Harz-Kies-Gemisch. Neben der Einsparung von Arbeitszeit wird mit der Erfindung gegenüber [0003] a) gleichzeitig Material (Harz, Kies) gespart. Darüber hinaus handelt es sich bei dem erfindungsgemäßen Aufbringen der Haftbrücken um einen emissionsfreien Prozess. Zum Aufschweißen der Haftbrücken wird weitestgehend die im Tiefziehvorgang vorhandene Energie genutzt. Im Vergleich zu der unter [0003] b) beschriebenen Variante der auf der dem Abwasser zugewandten Seite des Schachtbodenhalbteils unter das Plattenmaterial eingezogenen Profilleisten wird mit der Erfindung die Überstreckung des Plattenmaterials vermieden. Durch das rückseitig aufgeschweißte Kunststoffgranulat (3) wird die Wirksamkeit der vollflächigen Verankerung des Kunststoff-Schachtbodens im Beton signifikant erhöht, da die Gefahr des Ablösens der Harz-Kiesbeschichtung, die unter [0002] a) beschrieben wurde, durch den stoffschlüssigen Verbund des Kunststoffgranulates (3) mit dem Korpus des Schachtbodenhalbteils (1) ausgeschlossen wird.

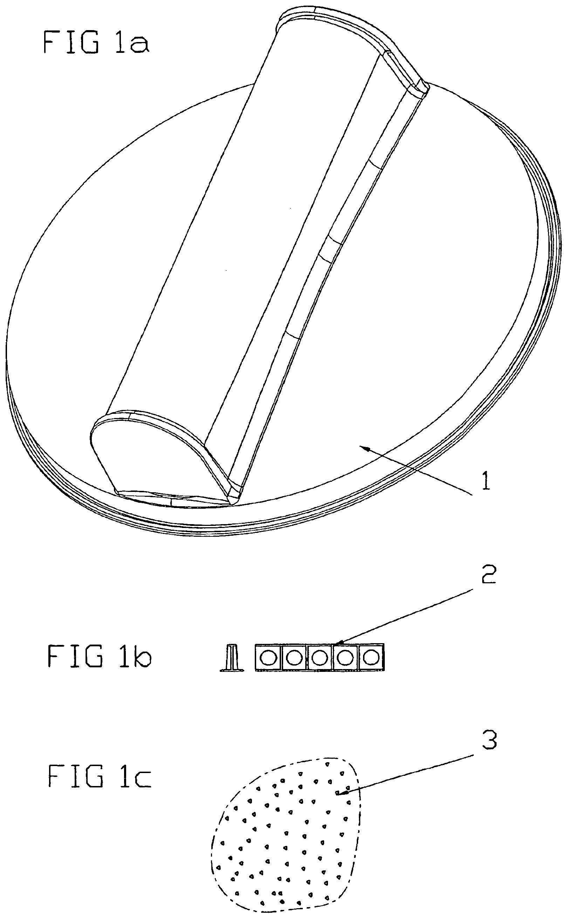

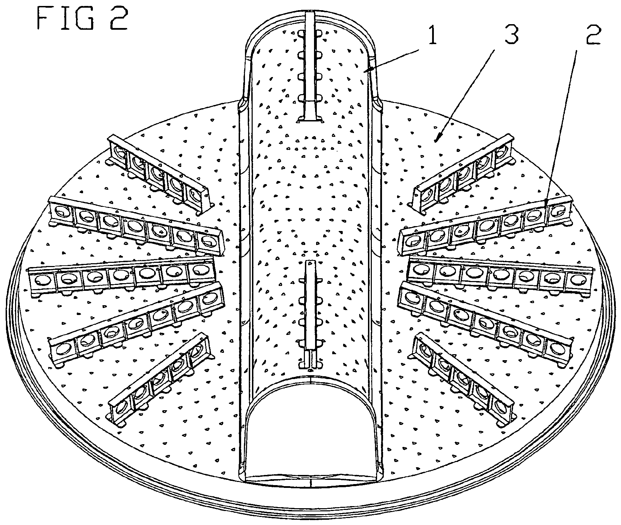

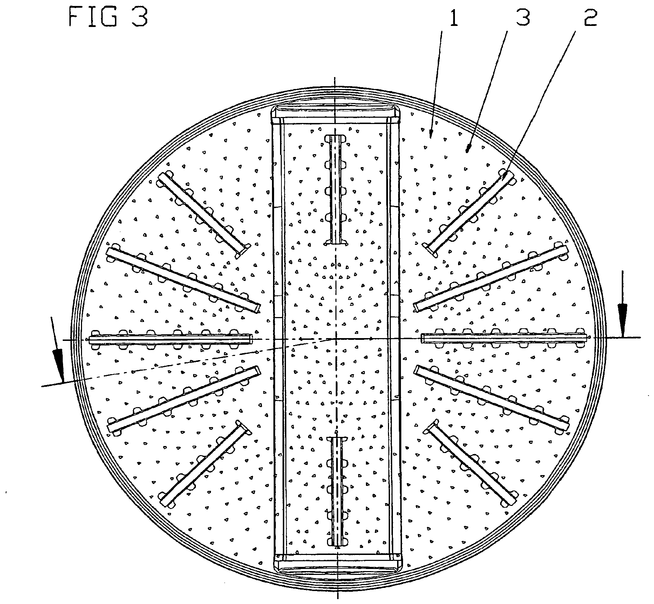

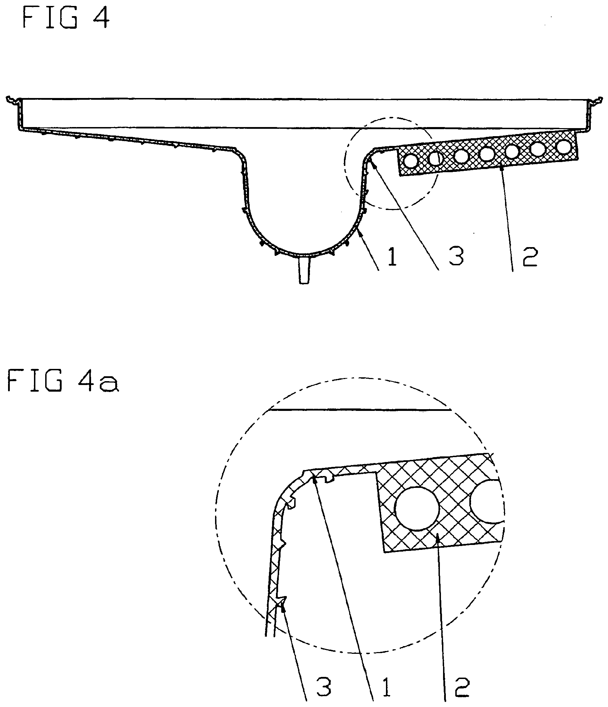

## Patentansprüche

1. Haftbrücken auf Schachtböden aus thermoplastischem Kunststoff, nämlich Kunststoffgranulat (3), vorzugsweise Mahlgut aus dem gleichen thermoplastischen Material wie das Plattenmaterial, **dadurch gekennzeichnet, dass** dieses Kunststoffgranulat (3) während des Prozesses der thermoplastischen Umformung des Schachtbodenhalbteiles (1) unter Nutzung der im Tiefziehprozess anfallenden Prozesswärme auf der später dem Beton zugewandten Seite manuell oder maschinell aufgebracht wird und dadurch mit der Oberfläche des Schachtbodenhalbteiles (1) verschweißt wird.

2. Haftbrücken auf Schachtböden aus thermoplastischem Kunststoff, nämlich Kunststoffprofilleisten (2), **dadurch gekennzeichnet, dass** diese Kunststoffprofilleisten (2) während des Prozesses der thermoplastischen Umformung des Schachtbodenhalbteiles (1) im vorgewärmten Zustand auf der später dem Beton zugewandten Seite manuell oder maschinell aufgebracht werden und durch die Prozesswärme vollflächig mit der Oberfläche des Schachtbodenhalbteiles (1) verschweißt werden.

## Claims

1. Grips on baseliners made out of thermoplastic material, namely plastic pellets (3), preferably grinded material from the same thermoplastic material as the sheet material, **characterized in that** during the process of the thermoplastic transformation of the semi-finished baseliner (1) said plastic pellets (3) are applied manually or mechanically on the surface of the side, which is facing the concrete later, using the arising process heat and are thereby welded with the surface of the semi-finished baseliner.

2. Grips on baseliners made out of thermoplastic material, namely bounding bridges (2), **characterized in that** during the process of the thermoplastic transformation of the semi-finished baseliner (1) said bounding bridges (2) are applied in a preheated state manually or mechanically on the surface of the side of the semi-finished baseliner (1), which is facing the concrete later, and are thereby all over welded with the surface by the arising process heat.

## Revendications

1. Pièces d'accroche sur les cunettes en matière thermoplastique, à savoir des granules en matière plastique (3), de préférence de granules broyées faites de la même matière que les plaques, **caractérisées par le fait que** ces granules plastiques (3) sont appliquées manuellement ou automatiquement lors du processus de déformation thermoplastique de la demi-partie cunettes (1) en utilisant la chaleur générée dans le procédé de thermoformage sur la partie de la cunette (1), qui fait face au béton plus tard, et ainsi sont soudé à la surface de la demi-partie cunettes (1).

2. Les pièces d'accroche sur les cunettes en matière thermoplastique, à savoir baguettes profilées en matière plastique (2), **caractérisées par le fait que** ces baguettes profilées en matière plastique (2) sont appliquées manuellement ou mécaniquement lors du processus de déformation thermoplastique de la demi-partie inférieure (1) à l'état préchauffé sur la partie de la cunette (1), qui fait face au béton plus tard, et sont soudées sur toute la surface à la surface de la demi-partie cunettes (1) par la chaleur de traitement.
